# EUROPEAN PATENT APPLICATION

(11) **EP 3 228 405 A1**
(43) Date of publication of application: **11.10.2017**
(21) Application number: 14909275.1
(22) Date of filing: 30.12.2014
(51) Int. Cl.: B22F 3/105, B23K 26/38, B23P 23/04, B29C 67/00, B33Y 30/00

(54) **ELECTRON BEAM MELTING AND LASER MILLING COMPOSITE 3D PRINTING APPARATUS**

(71) Applicant: Yuanmeng Precision Technology (Shenzhen) Institut, Shenzhen, Guangdong 518000 (CN)
(72) Inventor: XU, Yi, Shenzhen Guangdong 518000 (CN); LI, Junqi, Shenzhen Guangdong 518000 (CN); NIE, Yan, Shenzhen Guangdong 518000 (CN)
(74) Representative: Chew, Kwan Chong Daniel
(86) International application number: PCT/CN2014/095664
(87) International publication number: WO 2016/106603

(57) **Abstract**

The present application relates to the technical field of 3D printing apparatus, and discloses an electron beam melting and laser milling composite 3D printing apparatus, which comprises a base; wherein the base is provided thereon with a machining platform movable in a vertical direction; the base is further provided thereon with a powder spreading structure; an electron beam emitting structure and a laser milling head are arranged above the machining platform; the electron beam emitting structure is configured for emitting an electron beam to melt the metal powder layer and thereby form a single-layer or multi-layer approximate body; and the laser milling head is configured for emitting a laser beam to mill the single-layer or multi-layer approximate body. The 3D printing apparatus combine the removal machining taking laser milling as the main method with the incremental laminating manufacturing process taking electron beam melting 3D printing as the main method; therefore, the defects of the 3D printing technology in aspects such assizes, shape accuracies, or the like are overcome, the restrictions of cutting to the complexity of components or the like are overcome, the machined components do not need to be machined secondarily, and the problems of difficult clamping, large machining error, deformation of components occurring during machining, and difficult machining are avoided.

## Description

### TECHNICAL FIELD

The present application relates to the technical field of 3D (three-dimensional) printing apparatuses, and more particularly, relates to an electron beam melting and laser milling composite 3D printing apparatus.

### BACKGROUND

Metal melting 3D printing technology (Selective Laser Melting, SLM) is a kind of technology using high-brightness laser to directly melt metal power materials, and directly forming a component with any complicated structure, which has properties similar to a casting, via a 3D model, without adhesives.

By means of the metal melting 3D printing technology, a component having a strength level reaching that of a casting can be formed. However, the formed component has a large shape error and a poor surface finish; therefore, the formed component needs to be machined secondarily using a traditional machining method, only by this can the component obtain a shape and a surface accuracy meeting the requirements of aviation manufacturing industry. Besides, most components used in the aerospace industry, such as engine nozzles, blades, cellular combustion chambers or the like, are complicated thin-wall structures or truss core structures, or have a relatively large shape, or are in a shape of a free-form surface or the like; when a component produced by the metal melting 3D printing technology is further put onto a lathe for a secondary machining, the following problems may exist:
1) clamping is difficult, or after clamping, the machining error is large because it is impossible to position reference points of the component accurately due to a transformation of coordinates;
2) for a component having a thin-wall structure, during machining, stress deformation may occur in the component because there is no surface supporting the component;
3) some components may be difficult to machine because their inner structures are complicated and a tool is unable to enter the inside of such a component.

Due to the existence of the above problems, though the metal melting 3D printing technology has been applied into the producing and manufacturing of aircraft parts now, it has a narrow application range; it is only used for machining some components having low requirements for accuracies and strengths, or some components having simpler structures and being easy to be machined secondarily, and is far from being widely used.

### BRIEF SUMMARY

The objective of the present application is to provide an electron beam melting and laser milling composite 3D printing apparatus, in order to solve the technical problems in the prior art that when the component produced by the metal melting 3D printing technology is further put onto a lathe for a secondary machining, clamping is difficult, machining errors are large, components are prone to deform, and machining is difficult

The present application is realized as follows: an electron beam melting and laser milling composite 3D printing apparatus, which comprises a base;
wherein the base is provided thereon with a machining platform movable in a vertical direction; the base is further provided thereon with a powder spreading structure configured for spreading metal powder onto the machining platform to form a metal powder layer; an electron beam emitting structure and a laser milling head movable in a three-dimension space are arranged above the machining platform; the electron beam emitting structure is configured for emitting an electron beam to melt the metal powder layer formed on the machining platform and thereby form a single-layer or multi-layer approximate body; and the laser milling head is configured for emitting a laser beam to mill the single-layer or multi-layer approximate body formed on the machining platform.

In a preferred embodiment, the base is provided thereon with two guide rails arranged to be spaced from and parallel to each other; the machining platform is arranged between the two guide rails; the powder spreading device further includes a scrape and a powder storage case; wherein two ends of the scraper are movably connected to the two guide rails respectively, and a gap is formed between a lower end of the scraper and the machining platform; the powder storage case includes a powder storage cavity having an opening at an upper end thereof and configured for receiving the metal powder; the base defines a through-hole aligned with the opening at the upper end of the powder storage cavity; a powder transporting platform movable in the vertical direction and configured for transporting the metal powder to the base is further arranged in the powder storage cavity of the powder storage case; the powder transporting platform is respectively aligned with the opening at the upper end of the powder storage cavity and the through-hole in the base.

In a preferred embodiment, the base is provided thereon with two guide rails arranged to be spaced from and parallel to each other; the machining platform is arranged between the two guide rails; the powder spreading device further includes a scrape and a powder leakage case located above the scraper; wherein two ends of the scraper are movably connected to the two guide rails respectively, and a gap is formed between a lower end of the scraper and the machining platform; the powder leakage case is further provided therein with a powder leakage cavity configured for receiving the metal powders, and a lower end of the powder leakage case defines a powder leakage hole; an upper end of the scraper is provided with a powder collection tank configured for collecting the metal powders falling from the powder leakage hole.

In a preferred embodiment, the powder spreading device includes two scrapers and two powder leakage cases; the two scrapers are respectively provided with a front end and a rear end of the machining platform, the two powder leakage cases are respectively arranged above the two scrapers.

In a preferred embodiment, sensors configured for detecting a thickness of the metal powder layer spread on the machining platform are respectively arranged on two sides of the machining platform.

In a preferred embodiment, the electron beam emitting structures each includes an electron beam generator configured to emit an electron beam and a coil configured to be electrified to generate a magnetic field; the electron beam emitted by the electron beam generator passes through the magnetic field generated by the coil.

In a preferred embodiment, a portal frame is movably connected with the two guide rails; the portal frame includes two connecting arms spaced from each other and a horizontal beam; lower ends respectively of the two connecting arms are movably connected to the two guide rails; two ends of the horizontal beam are connected to upper ends of the two connecting arms respectively; a moving terminal movable along the horizontal beam is movably connected to the horizontal beam, and a connecting plate that moves up and down with respect to the moving terminal is movably connected to the moving terminal; ; the laser milling head is connected to the connecting plate.

In a preferred embodiment, the laser milling head is further provided therein with a cooling line configured for allowing cooling water to flow through.

In a preferred embodiment, the electron beam melting and laser milling composite 3D printing apparatus further includes a recovering case, and the recovering case includes a recovering cavity configured for allowing the apparatus to recover the metal powders on the base; the recovering case is located below the base, and the base further defines a recovering opening communicated with the recovering cavity.

In a preferred embodiment, the electron beam melting and laser milling composite 3D printing apparatus is arranged in a machining space of a machining chamber; and the machining space of the machining chamber is in a vacuum state or is filled with inert gas.

Compared with the prior art, in the electron beam melting and laser milling composite 3D printing apparatus provided by the present application, the electron beam emitted by the electron beam emitting structure is used to melt layer by layer the metal powder layer, the laser beam emitted by the laser milling head is used to mill the single-layer or multi-layer approximate body, and the above steps are repeated until the machining of the component is finished. The 3D printing apparatus integrates a traditional removal accurate machining taking laser milling as a main method with an incremental laminating manufacturing process taking electron beam melting 3D printing as a main method together. Therefore, not only are the defects of the traditional 3D printing technology in aspects such as size and shape accuracy overcome, but also the restrictions of cutting machining to the complexity of components or the like are overcome too. In this way, the machined components do not need to be machined secondarily, and the problems of difficult clamping, large machining error, deformation of components occurring during machining, and difficult machining are avoided, the 3D printing technology achieves wider application space, and a new method and technical means are provided to the production and manufacturing of core and precision components in the aerospace industry. Furthermore, using the laser beam to mill the single-layer or multi-layer approximate body belongs to a non-contact milling machining, and the defects existing in the directly contact machining in which a traditional tool directly contacts with a single-layer or multi-layer approximate body are avoided, so that the milling machining accuracy is improved greatly.

### BRIEF DESCRIPTION OF THE DRAWINGS

Fig. 1 is a schematic view of an electron beam melting and laser milling composite 3D printing apparatus provided by an embodiment of the present application; and
Fig. 2 is a schematic view of a laser milling head provided by the embodiment of the present application.

### DETAILED DESCRIPTION OF THE PREFERRED EMBODIMENT

In order to make the objective, the technical solution and the advantages of the present application more clear, the present application is further explained in detail with reference to the accompanying drawings and embodiments. It should be understood that, the specific embodiments described herein are only used for explaining the present application, and are not a limitation to the present application.

Embodiments of the present application are described in detail with reference to the specific embodiments in the following.

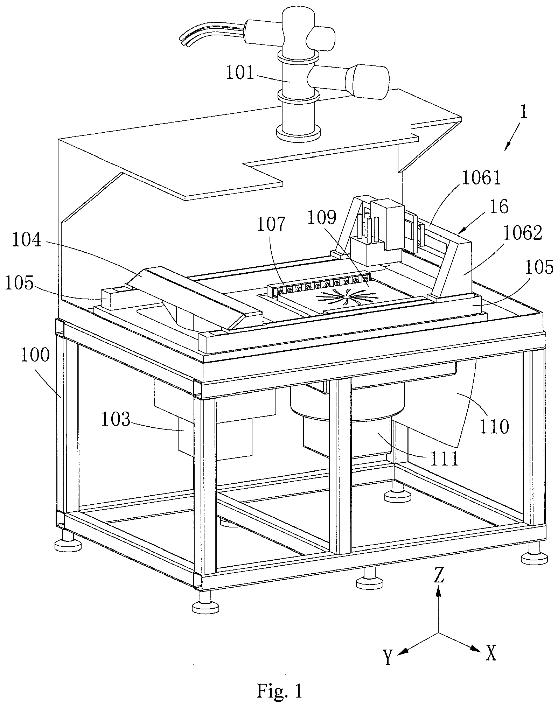

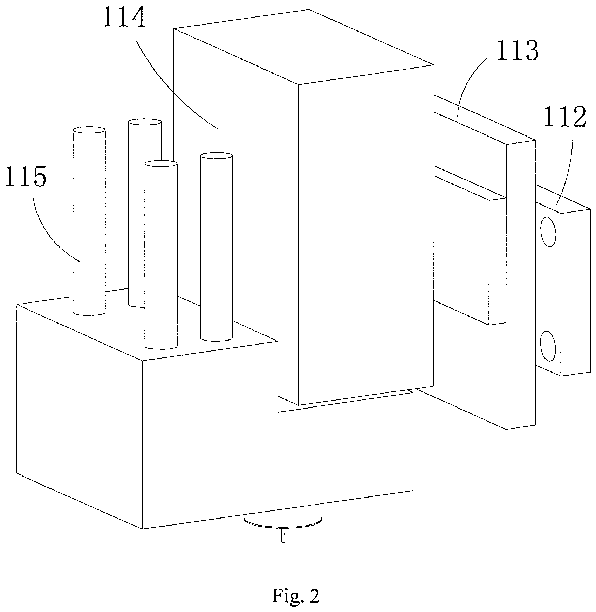

Figs. 1-2 show a preferred embodiment provided by the present application.

A 3D printing apparatus 1 provided by the present application combines laser milling machining with electron beam melting, and may be used to form various components, such as the components required in the aviation manufacturing industry, or the like.

The electron beam melting and laser milling composite 3D printing apparatus 1 comprises a base 100, a powder spreading device, an electron beam emitting structure 101 and a laser milling head 114. Wherein the base 100 is used as a foundation of the whole 3D printing apparatus 1 and has a bearing function. A machining platform 109 movable in a vertical direction is arranged on the base 100, while metal powder can be spread on the machining platform 109. The powder spreading structure is arranged on the base 100 and configured for transporting the metal powder or the like onto the machining platform 109, and the metal powder can form a metal powder layer on the machining platform 109. The electron beam emitting structure 101 is located above the machining platform 109, and emits an electron beam movable in a horizontal plane, and the electron beam is configured for melting the metal powder layer formed on the machining platform 109 to form a single-layer or multi-layer approximate body. The laser milling head 114 is also located above the machining platform 109, and is movable in a three-dimension space; the laser milling head 114 is configured for emitting a laser beam to mill the single-layer or multi-layer approximate body melted and formed on the machining platform 109.

As shown in Fig. 1, an XY plane parallel to the machining platform 109 is defined as a horizontal plane, a Z direction is defined as a vertical direction, and a plane perpendicular to the horizontal plane is defined as a vertical plane. In this way, the machining platform 109 is movable up and down in Z direction, the electron beam emitted by the electron beam emitting structure 101 is movable in XY plane, and the laser milling head 114 is movable in X, Y and Z directions.

In the aforesaid electron beam melting and laser milling composite 3D printing apparatus 1, the electron beam emitted from the electron beam emitting structure 101 is used to melt the metal powder layer in order to carry out the 3D printing process, and the laser beam emitted by the laser milling head 114 is used to mill the single-layer or multi-layer approximate body every time machined by the electron beam emitting structure 101. Therefore, the apparatus integrates the 3D printing technology and the milling machining together.

During the actual machining process, the specific operation processes include the following steps:
1) The metal powder is transported to the machining platform 109 and further spread onto the machining platform 109 by the powder spreading device in order to form a metal powder layer. Based on the 3D printing technology, the electron beam emitting structure 101 emits an electron beam to melt the metal powder layer on the machining platform 109, and a single-layer or multi-layer approximate body is formed in a line-by-line and layer-by-layer manner.
2) The laser beam emitted by the laser milling head 114 is used to mill the single-layer or multi-layer approximate body formed on the machining platform 109, thereby obtaining desired dimensions and surface accuracy required by a component.
3) The steps 1) and 2) are repeated, until the processing machining for the shape of the component is finished.

Every time after the steps 1) and 2) are finished, the machining platform 109 moves downwardly to a certain distance in order to ensure that the metal powder layer re-spread on the machining platform 109 is always at a same distance from a focus of the electron beam emitted by the electron beam emitting structure 101. In the step 1), the electron beam emitted by the electron beam emitting structure 101 moves in the horizontal plane, such that a single-layer or multi-layer approximate body is formed with the metal power layer on the machining platform 109. While in the step 2), the laser beam emitted by the laser milling head 114 moves in the three-dimension space, and can mill various kinds of single-layer or multi-layer approximate bodies in all directions.

When using the electron beam melting and laser milling composite 3D printing apparatus 1 provided by the present embodiment, firstly the electron beam is used to melt layer by layer the metal powder layer, then the laser beam emitted by the laser milling head 114 is used to mill single-layer or multi-layer approximate body, and the above steps are repeated until the machining of the component is finished. The 3D printing apparatus integrates a traditional removal accurate machining taking laser milling as the main method with an incremental laminating manufacturing process taking electron beam melting 3D printing as a main method together. Therefore, not only are the defects of the traditional 3D printing technology in aspects such as size and shape accuracy overcome, but also the restrictions of cutting machining to the complexity of components or the like are overcome too. In this way, the machined components do not need to be machined secondarily, and the problems of difficult clamping, large machining error, deformation of components occurring during machining, and difficult machining are avoided, the 3D printing technology achieves wider application space, and a new method and technical means are provided to the production and manufacturing of core and precision components in the aerospace industry.

In addition, using the laser beam emitted by the laser milling head 114 to mill the single-layer or multi-layer approximate body belongs to a non-contact milling machining, which avoids the defects existing in the direct contact machining of which a traditional tool directly contacts the single-layer or multi-layer approximate body, and the milling machining accuracy is improved greatly.

In this embodiment, the base 100 is provided thereon with two guide rails 105 spaced from and parallel to each other, and the two guide rails 105 are arranged on two sides of machining platform 109 respectively. The powder spreading device includes a scraper 104 and a powder storage case 103. Two ends of the scraper 104 are movably connected to the two guide rails 105 respectively, such that the scraper 104 is movable in the horizontal plane along the guide rails 105, and a gap is formed between a lower end face of the scraper 104 and the machining platform 109. The powder storage case 103 has a powder storage cavity having an opening at an upper end thereof, and the powder storage cavity of the powder storage case 103 is configured for storing the metal powder. The powder storage case 103 is located below the base 100, and a through-hole communicated with the opening at the upper end of the powder storage case 103 is defined in the base 100; that is, the through-hole is aligned with the opening at the upper end of the powder storage case 103. Of course, the through-hole is also located between two guide rails 105.

A powder transporting platform movable up and down is further arranged in the powder storage case 103. The powder transporting platform is aligned with the opening at the upper end of the powder storage case 103 and the through-hole in the base 100 respectively. In this way, when the metal powder layer needs to be spread onto the machining platform 109 by the scraper 104, the powder transporting platform carries the metal powder and moves upwardly, runs through the opening at the upper end of the powder storage case 103 and the through-hole in the base 100, until the metal powder is exposed on the base 100. In this way, the scraper 104 can be used to scrape the metal powder to the machining platform 109, and thereby forming a metal powder layerlt. Of course, a thickness of the metal powder layer every time formed on the machining platform 109 is in conformity to the gap between the lower end of the scraper 104 and the machining platform 109.

According to the actual machining requirements, the thickness of the metal powder layer every time spread on the machining platform 109 can be chosen,, as long as the scraper 104 is adjusted so that the gap between the lower end of the scraper 104 and the machining platform 109 is adjusted.

As a preferred embodiment, the powder spreading device includes two aforesaid scrapers 104 and two aforesaid powder storage cases 103. In this case, two ends of the two scrapers 104 are movably connected to the two guide rails 105, and the two scrapers 104 are respectively arranged at a front end and a rear end of the machining platform 109. In this way, when using the scraper 104 to spread metal powder, it is possible to interactively operate the two scrapers 104, and thus the spreading efficiency is improved greatly.

Alternatively, in other embodiments, the powder spreading device may include the aforesaid scraper 104 and a powder leakage case. The powder leakage case is located above the base 100, and a powder storage cavity is defined in the powder leakage case; the metal powder is stored in the powder leakage cavity of the powder leakage case. A lower end of the powder leakage case defines a powder leakage hole, the powder leakage hole is communicated with the powder storage cavity; the metal powder inside the powder leakage cavity can fall onto the base 100 via the powder leakage hole, the scraper 104 can in turns perform the spreading operation in such a way that the metal powder is spread onto the machining platform 109to form the metal powder layer.

In specific, the powder leakage hole extends in strips. In this way, it can ensure that a width of the metal powder layer spread by the scraper 104 meets the usage requirements. In general, it can ensure that a length of the powder leakage hole is slightly larger than a width of the machining platform 109.

Of course, for the structure provided with the powder leakage case to achieve a powder leakage from up and down, it is also possible to provide two powder leakage cases, which are respectively arranged at a front end and a rear end above the machining platform 109. Besides, by the cooperation of the two scrapers 104, an interactive spreading operation can be realized.

For the purpose of detecting the thickness of the metal powder layer spread on the machining platform 109, in this embodiment, sensors 107 are arranged on two sides of the machining platform 109 respectively, and the sensors 107 are configured for detecting the thickness of the metal powder layer spread on the machining platform 109. Information detected by the sensor 107 is fed back to a control center, and the control center further adjusts the gap between the machining platform 109 and the scraper 104.

In specific, in order to detect the thickness of the metal powder layer more accurately, in this embodiment, a plurality of aforesaid sensors 107 are respectively arranged on two sides of the machining platform 109 and extend along a side edge of the machining platform 109.

The electron beam emitting structure 101 further includes an electron beam generator and a coil. Wherein, the electron beam generator emits an electron beam, and the emitted electron beam in turn passes through a magnetic field generated by energizing the coil. In this way, by adjusting the magnetic field generated by the coil, a transmitting path of the electron beam can be changed, and thus the movement of the electron beam in the horizontal plane can be realized. According to the shape requirements for machining the approximate body components, the magnetic field generated by the coil can be correspondingly adjusted, such that a displacement of the electron beam is achieved.

In order to realize upward and downward movements of the machining platform 109, a lifting motor 111 is further connected to a lower end of the machining platform 109. The machining platform 109 is driven by power provided by the lifting motor 111 to move up and down. Every time after the powder spreading device spreads a layer of metal powder on the machining platform 109, the lifting platform controls the machining platform 109 to lower a constant distance; in this way, a distance between focuses of the electron beams emitted by the electron beam emitting structure 101 and the metal powder layer keeps constant.

A portal frame 106 is arranged on the two guide rails 105. The portal frame 106 includes two connecting arms 1062 arranged to be spaced from each other and a horizontal beam 1061. Lower ends respectively of the two connecting arms 1062 are movably connected to the two guide rails 105 respectively, and are movable along the guide rails 105. The horizontal beam 1061 is connected to upper ends respectively of the two connecting arms 1062 respectively. In this way, the horizontal beam 1061 stretches across the two guide rails 105. A moving terminal 112 is movably connected to the horizontal beam 1061, and the moving terminal 112 is movable along the horizontal beam 1061.

A connecting plate 113 is movably connected to the moving terminal. The connecting plate 113 can move up and down with respect to the moving terminal, that is, move along the vertical direction, i.e., the Z direction. The laser milling head 114 is connected to the connecting plate 113. In this way, when the connecting plate 113 moves in the vertical direction, the laser milling head 114 moves along therewith in the vertical direction.

In the structure described above, the horizontal beam 1061 can move along the two guide rails 105, that is, move along the Y direction; the moving terminal 112 can move along the horizontal beam 1061, that is, move along X direction; the connecting plate 113 moves up and down with respect to the connecting plate 113, that is, moves along the Z direction. In this way, the laser milling head 114 is movable in the three-dimension space.

Furthermore, the laser milling head is provided therein with a cooling line, and the cooling line 115 is configured for allowing cooling water to flow through. In this way, by circulating the cooling water in the cooling line 115, the heat generated by the laser milling head during the whole working process can be brought away by means of the flow of the cooling water, and heat dissipation effect is provided. Therefore, it can ensure that the laser milling head has better working efficiency and properties.

In this embodiment, the electron beam melting and laser milling composite 3D printing apparatus 1 further includes a metal powder recovering structure, and the metal powder recovering structure is configured for recovering the residual metal powder on the base 100 after machining. In this way, the cyclic utilization of the metal powder is facilitated.

In specific, the metal powder recovering structure includes a recovering case 110, and the recovering case 110 defines a recovering cavity for receiving the recovered metal powder. The recovering case 110 is located below the base 100, and the base 100 defines a recovering opening therein, and the recovering opening is communicated with the recovering cavity of the recovering case 110 is further defined in the base 100. In this way, after machining, the residual metal powder on the base 100 can enter the recovering cavity of the recovering case 110 via the recovering opening, and the metal powder in the recovering cavity can be reused circularly after the residue therein is filtered out and removed.

In this embodiment, the recovering opening is arranged at a side edge of the machining platform 109. Of course, along the moving direction of the scraper 104 during the powder spreading process, the recovering opening is arranged at the rear end of the machining platform 109. Alternatively, regarding an interactive powder spreading operation with two scrapers 104 in cooperation, the recovering openings can be respectively defined at the front end and the rear end of the machining platform 109. Alternatively, in other embodiments, the recovering opening may be arranged at two sides of the machining platform 109.

During the machining process using the electron beam melting and laser milling composite 3D printing apparatus 1, in order to prevent the metal powder from being oxidized, and thereby make the properties of the formed component be better, in this embodiment, the electron beam melting and laser milling composite 3D printing apparatus 1 further includes a machining chamber, and the machining chamber 107 has a machining space formed therein. The machining space is in a vacuum state, or is filled with inert gas. The base 100 is arranged in the machining space of the machining chamber; that is, the electron beam melting and laser milling composite 3D printing apparatus 1 is arranged in the machining space of the machining chamber. In this way, it is possible to reduce the impact of environment on the melting or solidifying of the metal, and improve the machining and physical properties of the metal. Therefore, the metal electron beam melting 3D printing technology can obtain wider application space, and production and manufacturing of metal with high melting point can be provided with new methods and technical means.

The embodiments described above are only preferred embodiments of the present application, and are not used to limit the present application. Any modification, alternative or improvements made within the spirit and the principle of the present application should be included in the protection of the present application.

## Claims

1. An electron beam melting and laser milling composite 3D printing apparatus, comprising a base; **characterized in that** the base is provided thereon with a machining platform movable in a vertical direction; the base is further provided thereon with a powder spreading structure configured for spreading metal powder onto the machining platform to form a metal powder layer; an electron beam emitting structure and a laser milling head movable in a three-dimension space are arranged above the machining platform; the electron beam emitting structure is configured for emitting an electron beam to melt the metal powder layer formed on the machining platform and thereby form a single-layer or multi-layer approximate body; and the laser milling head is configured for emitting a laser beam to mill the single-layer or multi-layer approximate body formed on the machining platform.

2. The electron beam melting and laser milling composite 3D printing apparatus according to claim 1, **characterized in that** the base is provided thereon with two guide rails arranged to be spaced from and parallel to each other; the machining platform is arranged between the two guide rails; the powder spreading device further includes a scrape and a powder storage case; **characterized in that** two ends of the scraper are movably connected to the two guide rails respectively, and a gap is formed between a lower end of the scraper and the machining platform; the powder storage case includes a powder storage cavity having an opening at an upper end thereof and configured for receiving the metal powder; the base defines a through-hole aligned with the opening at the upper end of the powder storage cavity; a powder transporting platform movable in the vertical direction and configured for transporting the metal powder to the base is further arranged in the powder storage cavity of the powder storage case; the powder transporting platform is respectively aligned with the opening at the upper end of the powder storage cavity and the through-hole in the base.

3. The electron beam melting and laser milling composite 3D printing apparatus according to claim 1, **characterized in that** the base is provided thereon with two guide rails arranged to be spaced from and parallel to each other; the machining platform is arranged between the two guide rails; the powder spreading device further includes a scrape and a powder leakage case located above the scraper; wherein two ends of the scraper are movably connected to the two guide rails respectively, and a gap is formed between a lower end of the scraper and the machining platform; the powder leakage case is further provided therein with a powder leakage cavity configured for receiving the metal powders, and a lower end of the powder leakage case defines a powder leakage hole; an upper end of the scraper is provided with a powder collection tank configured for collecting the metal powders falling from the powder leakage hole.

4. The electron beam melting and laser milling composite 3D printing apparatus according to claim 3, **characterized in that** the powder spreading device includes two scrapers and two powder leakage cases; the two scrapers are respectively provided with a front end and a rear end of the machining platform, the two powder leakage cases are respectively arranged above the two scrapers.

5. The electron beam melting and laser milling composite 3D printing apparatus according to any one of claims 1-4, **characterized in that** sensors configured for detecting a thickness of the metal powder layer spread on the machining platform are respectively arranged on two sides of the machining platform.

6. The electron beam melting and laser milling composite 3D printing apparatus according to any one of claims 1-4, **characterized in that** the electron beam emitting structures each includes an electron beam generator configured to emit an electron beam and a coil configured to be electrified to generate a magnetic field; the electron beam emitted by the electron beam generator passes through the magnetic field generated by the coil.

7. The electron beam melting and laser milling composite 3D printing apparatus according to any one of claims 1-4, **characterized in that** a portal frame is movably connected with the two guide rails; the portal frame includes two connecting arms spaced from each other and a horizontal beam; lower ends respectively of the two connecting arms are movably connected to the two guide rails; two ends of the horizontal beam are connected to upper ends of the two connecting arms respectively; a moving terminal movable along the horizontal beam is movably connected to the horizontal beam, and a connecting plate that moves up and down with respect to the moving terminal is movably connected to the moving terminal; ; the laser milling head is connected to the connecting plate.

8. The electron beam melting and laser milling composite 3D printing apparatus according to any one of claims 1-4, **characterized in that** the laser milling head is further provided therein with a cooling line configured for allowing cooling water to flow through.

9. The electron beam melting and laser milling composite 3D printing apparatus according to any one of claims 1-4, **characterized in that** the electron beam melting and laser milling composite 3D printing apparatus further includes a recovering case, and the recovering case includes a recovering cavity configured for allowing the apparatus to recover the metal powders on the base; the recovering case is located below the base, and the base further defines a recovering opening communicated with the recovering cavity.

10. The electron beam melting and laser milling composite 3D printing apparatus according to any one of claims 1-4, **characterized in that** the electron beam melting and laser milling composite 3D printing apparatus is arranged in a machining space of a machining chamber; and the machining space of the machining chamber is in a vacuum state, or is filled with inert gas.
